# EUROPÄISCHE PATENTSCHRIFT

(11) **EP 0 612 813 B1**
(45) Veröffentlichungstag und Bekanntmachung des Hinweises auf die Patenterteilung: **02.01.1997**
(21) Anmeldenummer: 94102043.0
(22) Anmeldetag: 10.02.1994
(51) Int. Cl.: C09B 41/00, C09B 29/033

(54) **Verfahren zur Herstellung von (3-Cyano-4-chlor-5-formylthien-2-ylazo)anilinen**
Process for the preparation of (3-cyano-4-chloro-5-formylthien-2-ylazo) anilines
Procédé pour la préparation de 3-cyano-4-chloro-5-formylthién-2-ylazo) anilines

(30) Priorität: 25.02.1993 DE 4305650
(43) Veröffentlichungstag der Anmeldung: 31.08.1994
(73) Patentinhaber: BASF Aktiengesellschaft, 67063 Ludwigshafen (DE)
(72) Erfinder: Gruettner-Mertin, Sabine, Dr., D-67112 Mutterstadt (DE); Reichelt, Helmut, Dr., D-67435 Neustadt (DE); Lange, Arno, Dr., D-67098 Bad Duerkheim (DE); Bach, Volker, Dr., D-67434 Neustadt (DE)

(56) Entgegenhaltungen:
- EP-A- 0 201 896
- EP-A- 0 463 401
- DE-A- 2 411 803

## Beschreibung

Die vorliegende Erfindung betrifft ein neues Verfahren zur Herstellung von (3-Cyano-4-chlor-5-formylthien-2-ylazo)anilinen durch Diazotierung von 2-Amino-3-cyano-4-chlor-5-formylthiophen und anschließende Kupplung mit Anilinderivaten in wäßriger Phase, wobei man die Kupplungsreaktion in Gegenwart eines Dispergiermittels durchführt.

Aus der EP-A-201 896 sind Azofarbstoffe mit 2-Amino-3-cyano-4-chlor-5-formylthiophen als Diazokomponente und Anilinen als Kupplungskomponente bekannt. Bei Anwendung der dort genannten Herstellmethoden erhält man jedoch Farbstoffe, die produktionstechnisch und anwendungstechnisch nicht völlig befriedigen. Beispielsweise ist der Trockengehalt der anfallenden Farbstoffe zu niedrig. Außerdem weisen die Farbstoffe Mängel in Brillanz und Farbstärke auf.

In der DE-A-2 411 803 wird die Herstellung von Azofarbstoffen in Gegenwart eines Dispergiermittels beschrieben, wobei als Dispergiermittel das Natriumsalz eines Kondensationsproduktes von Formaldehyd und Naphthalinsulfonsäure verwendet wird.

Aufgabe der vorliegenden Erfindung war es daher, ein neues Verfahren zur Herstellung von (3-Cyano-4-chlor-5-formylthien-2-ylazo)anilinen bereitzustellen, das durch Diazotierung des Aminothiophens und anschließende Kupplung mit einem Anilin in wäßriger Phase ablaufen und zu Zielprodukten führen sollte, die die eingangs genannten Mängel nicht mehr aufweisen.

Es wurde nun gefunden, daß die Herstellung von Azofarbstoffen der Formel I 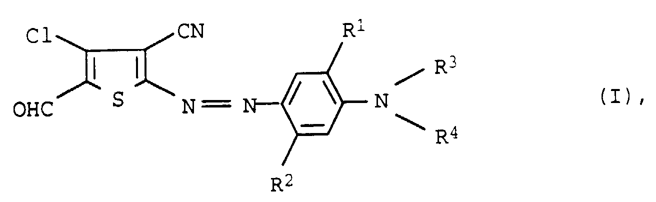 in der
- R¹: Wasserstoff oder C₁-C₄-Alkoxy,
- R²: C₁-C₄-Alkyl, C₁-C₄-Alkoxy oder gegebenenfalls durch C₁-C₄-Alkoxy substituiertes C₁-C₄-Alkanoylamino und
- R³ und R⁴: unabhängig voneinander jeweils C₁-C₄-Alkyl, das gegebenenfalls durch Cyano, Hydroxy, C₁-C₄-Alkoxy, C₁-C₄-Alkanoyloxy oder C₃-C₄-Alkanoyloxy substituiert ist, bedeuten,
durch Diazotierung von 2-Amino-3-cyano-4-chlor-5-formylthiophen und anschließende Kupplung mit einem Anilin der Formel II 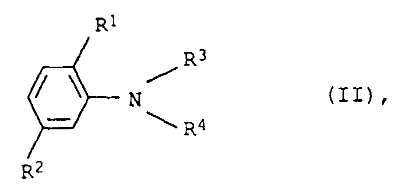 in der R¹, R², R³ und R⁴ jeweils die obengenannte Bedeutung besitzen, in wäßriger Phase vorteilhaft gelingt, wenn man die Kupplungsreaktion in Gegenwart eines Dispergiermittels auf Basis von Ligninsulfonat oder eines Arylsulfonsäure-Formaldehyd-Kondensates, wobei diese Produkte jeweils einen Gehalt von 3 bis 50 Gew.-%, bezogen auf das Gewicht des Dispergiermittels, einer oder mehrerer aromatischen oder langkettig aliphatischen Carbonsäuren, deren Salzen, deren Anhydriden oder einer Mischung hieraus aufweisen, durchführt.

Alle in den obengenannten Formeln auftretenden Alkyl- und Alkenylgruppen können sowohl geradkettig als auch verzweigt sein.

Wenn in den obengenannten Formeln substituierte Alkylgruppen auftreten, so weisen die Alkylreste in der Regel 1 bis 3 Substituenten auf.

Reste R², R³ und R⁴ sind z. B. Methyl, Ethyl, Propyl, Isopropyl, Butyl, Isobutyl oder sec-Butyl.

Reste R¹ sind, wie weiterhin auch Reste R², z. B. Methoxy, Ethoxy, Propoxy, Isopropoxy, Butoxy, Isobutoxy oder sec-Butoxy.

Reste R² sind weiterhin z. B. Formylamino, Acetylamino, Propionylamino, Butyrylamino, Isobutyrylamino, Methoxyacetylamino, Ethoxyacetylamino, 2- oder 3-Methoxypropionylamino oder 2- oder 3-Ethoxypropionylamino.

Reste R³ und R⁴ sind weiterhin z. B. 2-Methoxyethyl, 2-Ethoxyethyl, 2-Propoxyethyl, 2-Isopropoxyethyl, 2-Butoxyethyl, 2-Isobutoxyethyl, 2- oder 3-Methoxypropyl, 1-Methoxy-prop-2-yl, 2- oder 3-Ethoxypropyl oder 2- oder 3-Propoxypropyl, 2- oder 4-Methoxybutyl, 2- oder 4-Ethoxybutyl, 2-Hydroxyethyl, 2- oder 3-Hydroxypropyl, 1-Hydroxyprop-2-yl, 2- oder 4-Hydroxybutyl, 3-Hydroxybut-2-yl, 2-Formyloxyethyl, 2-Acetyloxyethyl, 2-Propionyloxyethyl, 2- oder 3-Acetyloxypropyl, 2- oder 4-Acetyloxybutyl, 2-Acryloyloxyethyl, 2- oder 3-Acryloyloxypropyl, 2- oder 4-Acryloyloxybutyl, 2-Methacryloyloxyethyl, 2- oder 3-Methacryloyloxypropyl, 2- oder 4-Methacryloyloxybutyl, 2-Cyanoethyl, 2- oder 3-Cyanopropyl oder 2- oder 4-Cyanobutyl.

Bevorzugt ist eine Verfahrensweise zur Herstellung von Azofarbstoffen der Formel I, in der
- R¹: Wasserstoff und
- R²: gegebenenfalls durch C₁-C₄-Alkoxy substituiertes C₁-C₄-Alkanoyl bedeuten und
- R³ und R⁴: jeweils die obengenannte Bedeutung besitzen.

Die im erfindungsgemäßen Verfahren zur Anwendung gelangende Dispergiermittel sind bekannt und beispielsweise in der EP-A-463 401 beschrieben.

Als Ligninsulfonate werden vor allem solche Sulfonate, hierbei insbesondere die Alkalimetallsalze, verwendet, deren Gehalt an Sulfonsäuregruppen 25 Gew.-% nicht übersteigt. Besonders bevorzugt sind Ligninsulfonate mit einem Gehalt von 5 bis 15 Gew.-% an Sulfonsäuregruppen.

Als Arylsulfonsäure-Formaldehyd-Kondensate werden vor allem solche mit einem maximalen Gehalt an Sulfonsäuregruppen von 40 Gew.-% verwendet.

Als Ausgangsprodukt für die Arylsulfonsäuren kommt insbesondere ein Gemisch solcher aromatischer Verbindungen in Betracht, die durch thermische Spaltung eines naphthenischen Rückstandsöl und Fraktionieren der Spaltprodukte erhältlich sind. Die naphthalinischen Rückstandsöle fallen beispielsweise beim Cracken von Leichtbenzin an. Sie werden z.B. in der DE-A-2 947 005 als hochsiedende aromatische Kohlenwasserstofföle bezeichnet. Das naphthenische Rückstandsöl wird vorzugsweise bei einer Temperatur von 1400 bis 1700°C thermisch gespalten. Die Spaltprodukte werden dann einer fraktionierenden Destillation zugeführt. Die bei Normaldruck (1013 mbar) von 100 bis 120°C übergehende Fraktion wird gesammelt und als aromatische Verbindung der Sulfonierung zugeführt. Eine solche Fraktion wird bei dem bekannten Acetylen-Öl-Quench-Prozeß üblicherweise als Nebenprodukt erhalten (Ullmann's Encyclopedia of Industrial Chemistry, VCH Verlagsgesellschaft mbH, Weinheim, 1985, Volume 71, Seiten 107 bis 112).

Diese Aromatenfraktion besteht aus einer Mischung vieler aromatischer Substanzen, deren Struktur und Menge praktisch nicht im einzelnen ermittelt werden kann. Folgende Arylverbindungen sind die hauptsächlichsten Vertreter dieser Aromatenfraktion:

| | Gew.-% in der Aromatenfraktion |
|---|---|
| Naphthalin | 30-55 |
| 2-Methylnaphthalin | 5-15 |
| 1-Methylnaphthalin | 4-10 |
| Inden | 3-10 |
| Diphenyl | 1- 5 |
| Methylinden | 1- 5 |
| Acenaphthen | 1- 4 |

Die Aromatenfraktion enthält außerdem an identifizierten Bestandteilen in Mengen von 0,1 bis etwa 2 Gew.% folgende Arylverbindungen: Fluoren, Indan, Methylstyrol, Phenanthren, Methylindan, Dimethylnaphthalin, Ethylnaphthalin, Xylole, Tetralin, Styrol, Methylethylbenzol, Anthracen, Fluoranthren, Pyren, Acenaphthylen und Toluol.

Besonders geeignete Arylsulfonsäuren enthalten in der Regel α- und β-Naphthalinsulfonsäuren, wobei das Verhältnis der α- zu den β-Isomeren 20:1 bis 1:8, insbesondere 10:1 bis 1:5 beträgt.

Geeignete aromatische Carbonsäuren oder deren Derivate sind beispielsweise Naphthalincarbonsäure, Naphthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure oder Säureanhydride, wie Phthalsäureanhydrid, Trimellitsäureanhydrid, Benzol-1,2,4,5-tetracarbonsäuredianhydrid oder Naphthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 Kohlenstoffatomen natürlichen oder synthetischen Ursprungs, beispielsweise höhere Fettsäuren wie Caprylsäure, Caprinsäure, Laurinsäure, Myristinsäure, Palmitinsäure, Stearinsäure, Ölsäure, Linolsäure oder Linolensäure, oder synthetisch hergestellte Carbonsäuren wie 2-Ethylhexansäure, Isononansäure oder Isotridecansäure.

Weiterhin sind auch Mischungen von Anhydriden, Mischungen von Carbonsäuren, Mischungen von Salzen der in Betracht kommenden Carbonsäuren oder Mischungen von Carbonsäuren und Anhydriden von Interesse. Als Salze der genannten Carbonsäuren kommen die Alkali-, Ammonium- oder Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak oder Alkanolaminen, wie Ethanolamin, Diethanolamin oder Triethanolamin, erhältlich sind.

Besonders bevorzugt werden Natriumbenzoat, Natriumphenylacetat, Natriumsalicylat, Natrium-4-hydroxybenzoat, Natriumterephthalat, Natrium-2-hydroxy-3-naphthalincarboxylat, Naphthalin-1-carbonsäure, Phthalsäureanhydrid oder Benzoesäure in den Dispergiermitteln verwendet.

Im erfindungsgemäßen Verfahren kommen vorzugsweise solche Dispergiermittel zur Anwendung, die
A) 50 bis 97 Gew.-%, insbesondere 70 bis 95 Gew.-%, eines oder mehrerer Arylsulfonsäure-Formaldehyd-Kondensate, eines oder mehrerer Ligninsulfonate oder einer Mischung hieraus und
B) 3 bis 50 Gew.-%, insbesondere 5 bis 30 Gew.-%, einer oder mehrerer aromatischen oder langkettigen aliphatischen Carbonsäuren, deren Salzen oder deren Anhydriden oder einer Mischung hieraus enthalten.

Bezogen auf das Gewicht an 2-Amino-3-cyano-4-chlor-5-formylthiophen und Anilin der Formel II, wendet man in der Regel 1 bis 10 Gew.-%, vorzugsweise 3 bis 6 Gew.-%, an Dispergiermittel an.

Das erfindungsgemäße Verfahren wird zweckmäßig so durchgeführt, daß man in einer geeigneten Apparatur das Aminothiophen in saurem wäßrigen Medium, z. B. 65 bis 98 gew.-%ige Schwefelsäure, mit einem Diazotierungsreagenz, z. B. 30 bis 43 gew.-%ige Nitrosylschwefelsäure, behandelt. Die Diazotierung wird im allgemeinen bei einer Temperatur von -5 bis +10°C durchgeführt. Je mol Aminothiophen gelangen in der Regel bis 1,1 mol Diazotierungsreagenz zur Anwendung.

Nach einer Nachrührzeit von üblicherweise 1 bis 5 Stunden wird das das Diazoniumsalz enthaltende Reaktionsgemisch in einem Zeitraum von 1 bis 8 Stunden zu einer Mischung, enthaltend Wasser, Anilin II und Dispergiermittel, bei einer Temperatur von -5 bis +15°C gegeben. Nach einer Nachrührzeit von üblicherweise 3 bis 8 Stunden ist die Umsetzung beendet und der resultierende Azofarbstoff der Formel I wird abgesaugt und mit Wasser gewaschen.

2-Amino-3-cyano-4-chlor-5-formylthiophen und Anilin II gelangen im erfindungsgemäßen Verfahren in der Regel im Molverhältnis von 1 : 0,8 bis 1 : 1,1 zur Anwendung.

Bezogen auf das Gewicht an Aminothiophen wendet man bei der Diazotierung im allgemeinen 400 bis 900 Gew.-% des oben beschriebenen sauren wäßrigen Mediums an.

Bezogen auf das Gewicht an Anilin II wendet man bei der Kupplung in der Regel 10 bis 20 Gew.-% Wasser/Eis an.

Mittels des erfindungsgemäßen Verfahrens, das sowohl in kontinuierlicher als auch diskontinuierlicher Arbeitsweise vorgenommen werden kann, gelingt es, die Zielprodukte in hoher Reinheit herzustellen. Die resultierenden Farbstoffe der Formel I sind gut isolierbar und weisen bereits nach dem Absaugen einen hohen Trokkengehalt auf.

Bei den Farbstoffen der Formel I handelt es sich um wertvolle Dispersionsfarbstoffe zum Färben von Polyester. Dabei zeichnen sich die mittels des erfindungsgemäßen Verfahrens hergestellten Farbstoffe durch besonders hohe Brillanz und Farbstärke aus.

Die folgenden Beispiele sollen die Erfindung näher erläutern.

### Beispiel 1

294 g 85 gew.-%ige Schwefelsäure wurden auf 10°C abgekühlt und bei dieser Temperatur mit 46,6 g 2-Amino-3-cyano-4-chlor-5-formylthiophen versetzt. Danach kühlte man auf 0°C ab und gab man im Verlauf von 1 h 93 g 42 gew.-%ige Nitrosylschwefelsäure zu. Das resultierende Reaktionsgemisch wurde bei 0°C 1 h nachgerührt und dann im Verlauf von 1 h zu einem Gemisch aus 250 ml Wasser, 150 g Eis, 54 g 3-Acetylamino-N,N-diethylanilin und 3 g eines Dispergiermittels auf Basis eines Arylsulfonsäure-Formaldehyd-Kondensats, das zusätzlich noch Benzoesäure aufwies und das in der EP-A-463 401 als Dispergiermittel 3 beschrieben ist, gegeben. Dabei betrug die Temperatur 0°C, was durch Zugabe von 350 g Eis erreicht wurde. Nach einer Nachrührzeit von 3 h versetzte man mit 750 ml Wasser und erhöhte die Temperatur des Reaktionsgemisches zunächst auf 60°C und nach 30 min auf 90°C. Bei dieser Temperatur wurde 1 h nachgerührt, dann mit 500 m1 Wasser versetzt und filtriert. Man erhielt 211 g feuchtes Produkt, das 81,5 g des Farbstoffs der Formel 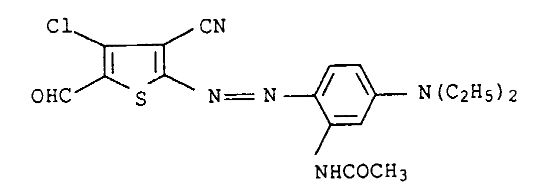 sowie 120 g Wasser enthielt.

### Beispiel 2

56 g 2-Amino-3-cyano-4-chlor-5-formylthiophen wurden in 180 ml 85 gew.-%iger Schwefelsäure bei 10 bis 15°C während 1 h eingetragen. Danach wurde auf 0 bis 5°C abgekühlt und innerhalb von 0,5 h 98,4 g 40 gew.-%ige Nitrosylschwefelsäure zugegeben. Das Reaktionsgemisch wurde 1 h bei 0°C nachgerührt und dann im Verlauf von 1 h zu einem Gemisch aus 72,9 g 3-Methoxyacetylamino-N,N-diethylanilin, 300 ml Wasser, 500 g Eis, 10 ml konz. Schwefelsäure und 8,1 g Dispergiermittel (wie in Beispiel 1 beschrieben) gegeben.

Nach einer Nachrührzeit von 3 h versetzte man mit 700 ml Wasser und erhöhte die Temperatur zunächst auf 60°C und nach 30 min auf 90°C. Bei dieser Temperatur wurde 1 h nachgerührt. Dann wurde mit 500 ml Wasser versetzt und filtriert. Man erhielt 409,5 g feuchtes Produkt, das 107,1 g des Farbstoffs der Formel 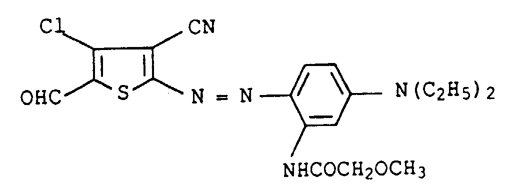 sowie 281 g Wasser enthielt.

## Patentansprüche

1. Verfahren zur Herstellung von Azofarbstoffen der Formel I 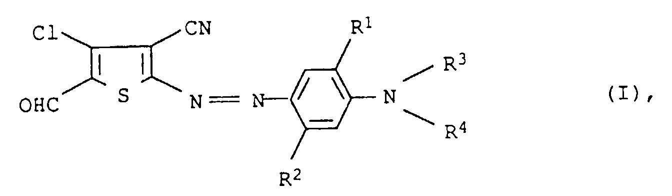 in der
R¹ Wasserstoff oder C₁-C₄-Alkoxy,
R² C₁-C₄-Alkyl, C₁-C₄-Alkoxy oder gegebenenfalls durch C₁-C₄-Alkoxy substituiertes C₁-C₄-Alkanoylamino und
R³ und R⁴ unabhängig voneinander jeweils C₁-C₄-Alkyl, das gegebenenfalls durch Cyano, Hydroxy, C₁-C₄-Alkoxy, C₁-C₄-Alkanoyloxy oder C₃-C₄-Alkenoyloxy substituiert ist, bedeuten,
durch Diazotierung von 2-Amino-3-cyano-4-chlor-5-formylthiophen und anschließende Kupplung mit einem Anilin der Formel II 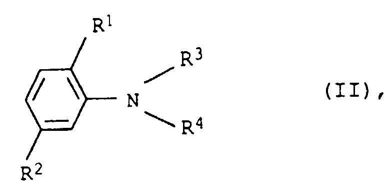 in der R¹, R², R³ und R⁴ jeweils die obengenannte Bedeutung besitzen, in wäßriger Phase, dadurch gekennzeichnet, daß man die Kupplungsreaktion in Gegenwart eines Dispergiermittels auf Basis von Ligninsulfonat oder eines Arylsulfonsäure-Formaldehyd-Kondensates, wobei diese Produkte jeweils einen Gehalt von 3 bis 50 Gew.-%, bezogen auf das Gewicht des Dispergiermittels, einer oder mehrerer aromatischen oder langkettig aliphatischen Carbonsäuren, deren Salzen, deren Anhydriden oder einer Mischung hieraus aufweisen, durchführt.

2. Verfahren nach Anspruch 1, dadurch gekennzeichnet, daß
R¹ Wasserstoff und
R² gegebenenfalls durch C₁-C₄-Alkoxy substituiertes C₁-C₄-Alkanoylamino bedeuten und
R³ und R⁴ jeweils die in Anspruch 1 genannte Bedeutung besitzen.

3. Verfahren nach Anspruch 1, dadurch gekennzeichnet, daß man, bezogen auf das Gewicht an 2-Amino-3-cyano-4-chlor-5-formylthiophen und Anilin der Formel II, 1 bis 10 Gew.-%, an Dispergiermittel verwendet.

4. Verfahren nach Anspruch 1, dadurch gekennzeichnet, daß man Dispergiermittel verwendet, die
A) 50 bis 97 Gew.-% eines oder mehrerer Arylsulfonsäure-Formaldehyd-Kondensate, eines oder mehrerer Ligninsulfonate oder einer Mischung hieraus und
B) 3 bis 50 Gew.-% einer oder mehrerer aromatischen oder langkettigen aliphatischen Carbonsäuren, deren Salzen oder deren Anhydriden oder einer Mischung hieraus enthalten.

## Claims

1. A process for preparing azo dyes of the formula I 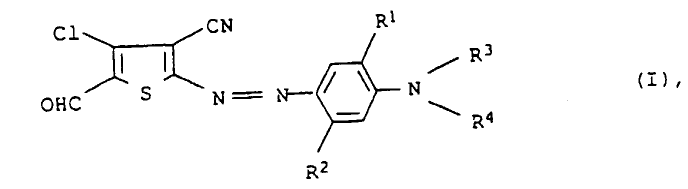 where
R¹ is hydrogen or C₁-C₄-alkoxy,
R² is C₁-C₄-alkyl, C₁-C₄-alkoxy or unsubstituted or C₁-C₄-alkoxy-substituted C₁-C₄-alkanoylamino and
R³ and R⁴ are independently of each other C₁-C₄-alkyl which may be substituted by cyano, hydroxyl, C₁-C₄-alkoxy, C₁-C₄-alkanoyloxy or C₃-C₄-alkenoyloxy,
by diazotization of 2-amino-3-cyano-4-chloro-5-formylthiophene and subsequent coupling with an aniline of the formula II 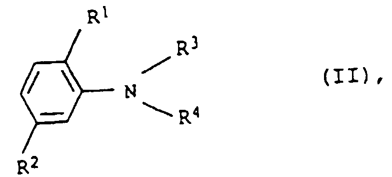 where R¹, R², R³ and R⁴ are each as defined above, in aqueous phase, characterized in that the coupling reaction is carried out in the presence of a dispersant based on ligninsulfonate or on an arylsulfonic acid-formaldehyde condensate, these products each comprising from 3 to 50% by weight, based on the weight of the dispersant, of one or more aromatic or long-chain aliphatic carboxylic acids, their salts, their anhydrides or a mixture thereof.

2. A process as claimed in claim 1, characterized in that
R¹ is hydrogen,
R² is unsubstituted or C₁-C₄-alkoxy-substituted C₁-C₄-alkanoylamino, and
R³ and R⁴ are each as defined in claim 1.

3. A process as claimed in claim 1, characterized in that from 1 to 10% by weight of dispersant is used based on the weight of 2-amino-3-cyano-4-chloro-5-formylthiophene and aniline of the formula II.

4. A process as claimed in claim 1, characterized in that dispersants are used comprising
A) from 50 to 97% by weight of one or more arylsulfonic acid-formaldehyde condensates, one or more ligninsulfonates or a mixture thereof, and
B) from 3 to 50% by weight of one or more aromatic or long-chain aliphatic carboxylic acids, their salts or their anhydrides or a mixture thereof.

## Revendications

1. Procédé de préparation de colorants azoïques de formule I 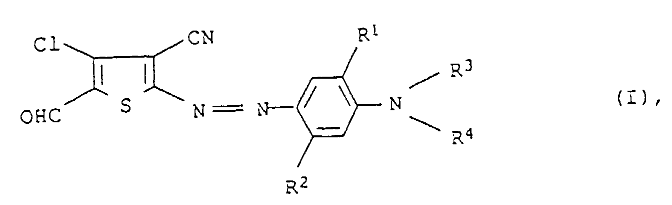 dans laquelle
R¹ représente un atome d'hydrogène ou un reste alcoxy en C₁-C₄,
R² représente un reste alkyle en C₁-C₄, alcoxy en C₁-C₄ ou alcanoylamino en C₁-C₄ éventuellement substitué par un groupement alcoxy en C₁-C₄ et
R³ et R⁴ représentent chacun, indépendamment l'un de l'autre, un reste alkyle en C₁-C₄ qui est éventuellement substitué par des groupements cyano, hydroxy, alcoxy en C₁-C₄, alcanoyloxy en C₁-C₄ ou alcénoyloxy en C₃-C₄,
par diazotation de 2-amino-3-cyano-4-chloro-5-formylthiophène, suivie de copulation avec une aniline de formule II 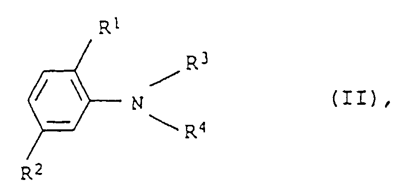 dans laquelle R¹, R², R³ et R⁴ ont chacun la signification donnée ci-dessus, en phase aqueuse, caractérisé en ce que l'on mène la réaction de copulation en présence d'un dispersant à base de lignine sulfonate ou d'un produit de condensation acide arylsulfonique/formaldéhyde, ces produits présentant chacun une teneur de 3 à 50% en poids, par rapport au poids du dispersant, d'un ou de plusieurs acides carboxyliques aromatiques ou aliphatiques à longue chaîne, de leurs sels, de leurs anhydrides ou d'un mélange de ceux-ci,

2. Procédé selon la revendication 1, caractérisé en ce que
R¹ représente un atome d'hydrogène,
R² représente un reste alcanoylamino en C₁-C₄ éventuellement substitué par un groupement alcoxy en C₁-C₄ et
R³ et R⁴ ont chacun la signification indiquée dans la revendication 1.

3. Procédé selon la revendication 1, caractérisé en ce que l'on utilise 1 à 10% en poids de dispersant par rapport au poids du 2-amino-3-cyano-4-chloro-5-formylthiophène et de l'aniline de formule II.

4. Procédé selon la revendication 1, caractérisé en ce que l'on utilise des dispersants qui contiennent
A) 50 à 97% en poids d'un ou de plusieurs produits de condensation acide arylsulfonique/formaldéhyde, d'un ou de plusieurs lignines sulfonates ou d'un mélange de ceux-ci et
B) 3 à 50% en poids d'un ou de plusieurs acides carboxyliques aromatiques ou aliphatiques à longue chaîne, de leurs sels, de leurs anhydrides ou d'un mélange de ceux-ci.
